# EUROPEAN PATENT SPECIFICATION

(11) **EP 0 787 570 B1**
(45) Date of publication and mention of the grant of the patent: **11.09.2002**
(21) Application number: 97101627.4
(22) Date of filing: 31.01.1997
(51) Int. Cl.: B29C 45/17

(54) **Process for producing a hollow article**
Verfahren zur Herstellung eines Hohlkörpers
Procédé de production d'un article creux

(30) Priority: 01.02.1996 JP 1665396; 06.02.1996 JP 2014096
(43) Date of publication of application: 06.08.1997
(73) Proprietor: Sumitomo Chemical Company, Limited, Chuo-ku Osaka 541-8550 (JP)
(72) Inventor: Matsumoto, Masahito, Osaka (JP); Kitayama, Takeo, Osaka (JP); Matsubara, Shigeyoshi, Osaka-shi, Osaka (JP)
(74) Representative: VOSSIUS & PARTNER

(56) References cited:
- EP-A- 0 310 914
- EP-A- 0 495 614
- EP-A- 0 624 447
- WO-A-90/00466
- WO-A-93/25367
- US-A- 5 204 050
- PATENT ABSTRACTS OF JAPAN vol. 016, no. 471 (M-1318), 30 September 1992 & JP 04 168017 A (NIPPON PLAST CO LTD), 16 June 1992,
- PATENT ABSTRACTS OF JAPAN vol. 095, no. 002, 31 March 1995 & JP 06 315970 A (AARU PII TOUPURA KK), 15 November 1994,

## Description

The present invention relates to a process for supplying a compressed gas, which process is performed in a process for producing a resin article having a hollow portion (hereinafter, the resin article being referred to as a "hollow article"), and a process for producing a hollow article using the same process.

Heretofore, a process for producing a hollow article which comprises steps of supplying a molten resin into a mold cavity formed between mold surfaces of a pair of a male mold and a female mold, then filling the mold cavity with the molten resin by mold closing, then opening the molds, while supplying a compressed gas into the mold cavity from a gas supplying opening provided in a mold surface, until a cavity clearance (a distance between mold surfaces in a direction of mold opening/closing) reaches a thickness of a desired product to form a hollow portion in the molten resin, and then cooling to solidify the molten resin while maintaining an inner pressure due to the compressed gas, is known.

In such a process, the compressed gas is generally supplied from one gas supplying opening. As described in Japanese Patent unexamined Publication Hei 1-128814, a process wherein a supplying pressure of the compressed gas from the gas supplying opening is controlled during the passage of time. However, this process can not form a sufficient hollow portion when a desired product is complicated in shape or is large, therefore, it is required that the compressed gas is supplied from plural gas supplying openings. Also when a hollow article having plural hollow portions is produced, the compressed gas should be supplied from plural gas supplying openings.

In a conventional process wherein the compressed gas is supplied from plural gas supplying openings, the plural gas supplying openings are merely connected with branched gas paths which are supplied from a main gas path derived from a gas supplying source. A supplying pressure or a rate of flow of the compressed gas at each gas supplying opening is uniformly controlled at the gas supplying source to show a uniform behavior at all gas supplying openings. Because the supplying pressure at each gas supplying opening is not controlled independently or systematically, a desired hollow article having a desired shape, volume or arrangement of the hollow portions, or having an excellent appearance, or especially having plural independent hollow portions cannot be obtained.

In such a process, when a hollow article having a relatively large proportion of a thickness of a hollow portion to that of a product, so called a highly hollow article, is produced, the use of frame-like mold parts, as show in Japanese Patent unexamined Publication Hei 6-315970, are required. The frame-like mold parts are required for preventing breakage of an outer wall of the hollow article due to forced extension of the molten resin. However, when the shape of the desired hollow article is complicated or its size is large, the frame-like mold parts are difficult to be produced or be mounted to the molds. Furthermore, endurance of the molds is deteriorated because the frame-like mold parts are mounted at the shearing portion of the molds.

JP-A-04-168017 discloses a process for producing a hollow resin product having a bent portion, the process comprising the steps of (1) injecting a fluid into the respective masses of a molten resin which were supplied into a cavity through at least two gates while under an injection molding process, wherein the fluid is incompatible with the resin, (2) pressurizing the interior of the respective masses to make them meet each other at a bent portion of the cavity so as to form a partition wall and thus produce a resin core, (3) inserting the resin core into a resin-shell-forming mold to produce a resin shell covering the periphery of the core where end portions of the core remain uncovered, and (4) pouring a fluid to which the core material is erosive, from the end portions of the core, into the interior of the hollow portions in order to eliminate the core.

EP-A-0 624 447 relates to a method for manufacturing synthetic resin containers including the steps of (a) forming a inner surface layer component from a synthetic resin sheet by thermoforming, (b) fitting the inner surface layer component onto a male die, (c) pouring a synthetic resin in a melt condition into the inside of a female die, (d) fitting the male die onto the female die and bringing it close to the female die to compress the synthetic resin, (e) injecting compressed air into the synthetic resin through at least one air nozzle formed in the female die while enlarging a gap between the male and female dies so as to correspond to a predetermined thickness of a prospective molded product, (f) causing the compressed air to press the synthetic resin against the entire inner surface of the cavity, and (g) cooling the synthetic resin to solidify the same and releasing the product from the dies.

The present inventors found a process for easily producing the above-mentioned highly-hollow article, or a hollow article having a complicated shape, and, especially, a hollow article having plural hollow portions, without using the frame-like mold parts. As a result, they found a novel and useful process for supplying a compressed gas from plural gas supplying openings which process being performed in a process for producing a hollow article, and accomplished the present invention. The process according to the present invention is defined by the features of the claims.

Generally, in accordance with the present invention the compressed gas is supplied under following three conditions:
(1) the compressed gas is supplied from plural gas supplying openings;
(2) the compressed gas is supplied from two or more gas supplying openings simultaneously, during at least a part of the period of time when the compressed gas is supplied;
(3) during at least a part of the period of time when the compressed gas is simultaneously supplied from two or more gas supplying openings, a supplying pressure or a rate of flow of the compressed gas at, at least, one gas supplying opening differs from those at the other gas supplying openings.

The above process for supplying a compressed gas provides a novel process for producing a hollow article. Therefore, the present invention also provides a process for producing a hollow article, which process comprises steps of supplying a molten resin into a mold cavity formed by a pair of a male mold and a female mold and supplying a compressed gas into the molten resin in the mold cavity, wherein the compressed gas is supplied under the above-mentioned conditions (1) to (3).

An example of the process for producing a hollow article includes a process comprising the following steps, and in the process the compressed gas is supplied under the above-mentioned conditions (1) to (3).
(a) A step of supplying a predetermined amount of a molten resin to a mold cavity defined between mold surfaces of a pair of a male mold and a female mold, the molds being opened.
(b) A step of starting to close the molds during step (a), or at or after the completion of step (a).
(c) A step of continuing to close the molds until the mold cavity is filled with the molten resin.
(d) A step of starting to open the molds at or after the time when the mold cavity is filled with the molten resin.
(e) A step of starting to supply a compressed gas from gas supplying openings provided on the mold surface, before or at the time of the starting to open the molds.
(f) A step of continuing to open the molds until a cavity clearance reaches a predetermined value while supplying the compressed gas.
(g) A step of cooling the molten resin to solidify it while supplying the compressed gas.

In the following preferred embodiments of the present invention will be described in connection with the drawings, in which:
Figure 1 demonstrates a first example of a flowing route of a compressed gas for performing the process for supplying a compressed gas of the present invention;
Figure 2 demonstrates a second example of a flowing route of a compressed gas for performing the process for supplying a compressed gas of the present invention;
Figure 3 demonstrates a third example of a flowing route of a compressed gas for performing the process for supplying the compressed gas of the present invention;
Figure 4 demonstrates a fourth example of a flowing route of a compressed gas for performing the process for supplying a compressed gas of the present inventions;
Figure 5 demonstrates a fifth example of a flowing route of a compressed gas for performing the process for supplying a compressed gas of the present invention;
Figure 6 is a cross section of a mold to be used for the process for supplying a compressed gas and the process for producing a hollow article of the present invention;
Figure 7 shows a state where the process for producing a hollow article of the present invention is performed;
Figure 8 shows a state where the process for producing a hollow article of the. present invention is performed;
Figure 9 shows a state where the process for producing a hollow article of the present invention is performed;
Figure 10(a-c) demonstrates a hollow article having ribs and plural hollow portions produced by the process of the present invention. Figure 10(a) shows an appearance of the hollow article. Figure 10(b) shows a cross section of the hollow article at Line A-A in Figure 10(a). Figure 10 (c) shows a cross section of the hollow article at Line B-B in Figure 10(a); and
Figure 11(a-d) demonstrates a hollow article having ribs and plural hollow portions produced by the process of the present invention. Figure 11(a) shows a plan view of the hollow article from an upper side thereof. Figure 11(c) shows a plan view of the hollow article from a lower side thereof. Figure 11(b) and (d) shows a front view and a side view of the hollow article, respectively.

A process for supplying a compressed gas of the present invention is performed in a process for producing a hollow article comprising steps of supplying a molten resin into a mold cavity formed by a pair of a male and female mold and supplying a compressed gas into the mold cavity containing the molten resin in the mold cavity. Said step of supplying the molten resin into the mold cavity may be done by an arbitrary method such as, for example, an injection molding method wherein the molten resin is supplied into a closed mold cavity, a compression molding method wherein the molten resin is supplied (injected) into an unclosed mold cavity and then the mold cavity is closed to spread the molten resin such that the mold cavity is filled with the molten resin, and an injection-compression molding method wherein the molten resin is supplied (injected) into an unclosed mold cavity and the mold cavity is closed while the molten resin is being supplied.

In the process for supplying a compressed gas, it is required that the compressed gas is supplied into the mold cavity from plural gas supplying openings {condition (1)}. Said gas supplying openings are generally provided at a position where a hollow portion will be formed. When one hollow portion will be formed, plural gas supplying openings are provided at a position where the hollow portion will be formed. When plural hollow portions will be formed, it is preferred that plural gas supplying openings are provided at positions where each hollow portions will be formed. In this case, although one gas supplying opening is generally provided for every hollow portion, two or more gas supplying openings may be provided for every hollow portion, if necessary. Each of the gas supplying openings is connected with a gas supplying source through a gas path. The gas path has a valve to open or close the gas path (a path-open-close valve) or a valve to control a supplying pressure of the compressed gas (a pressure controlling valve) or a valve to control a rate of flow of the compressed gas (a flow-rate controlling valve). As mentioned below, it is not necessary that the path-open-close valve, the pressure controlling valve or the flow-rate controlling valve are individually provided for every gas paths. They may be shared by plural gas paths.

In the present invention, following three conditions are also required:
(1) the compressed gas is supplied from plural gas supplying openings;
(2) the compressed gas is supplied from two or more gas supplying openings simultaneously, during at least a part of the period of time when the compressed gas is supplied;
(3) during at least a part of the period of time when the compressed gas is supplied from two or more gas supplying openings simultaneously, a supplying pressure or a rate of flow of the compressed gas at, at least, one gas supplying opening differs from those at the other gas supplying openings.

When one hollow portion will be formed, the supplying pressure or the rate of flow of the compressed gas is controlled at plural gas supplying openings provided at a position where the hollow portion will be formed. When plural hollow portions will be formed, the supplying pressure or the rate of flow of the compressed gas is controlled at plural gas supplying openings which are provided to correspond to positions where the hollow portions will be formed. The process for supplying a compressed gas of the present invention is useful for the latter case where the supplying pressure of the compressed gas is controlled.

Hereinafter, the process for supplying a compressed gas of the present invention will be described in more detail with reference to the accompanying drawings.

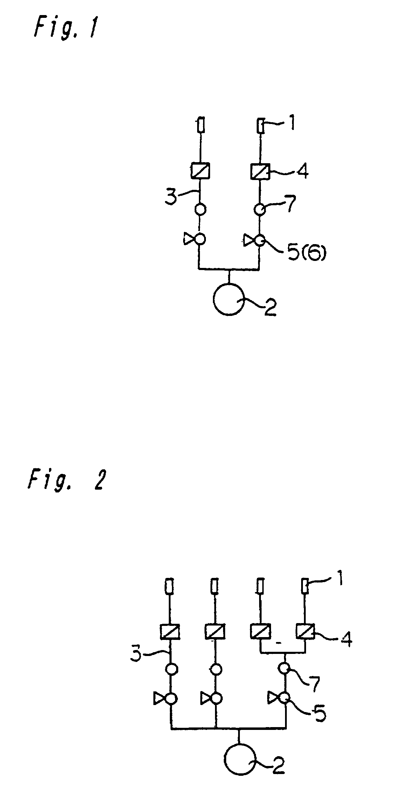

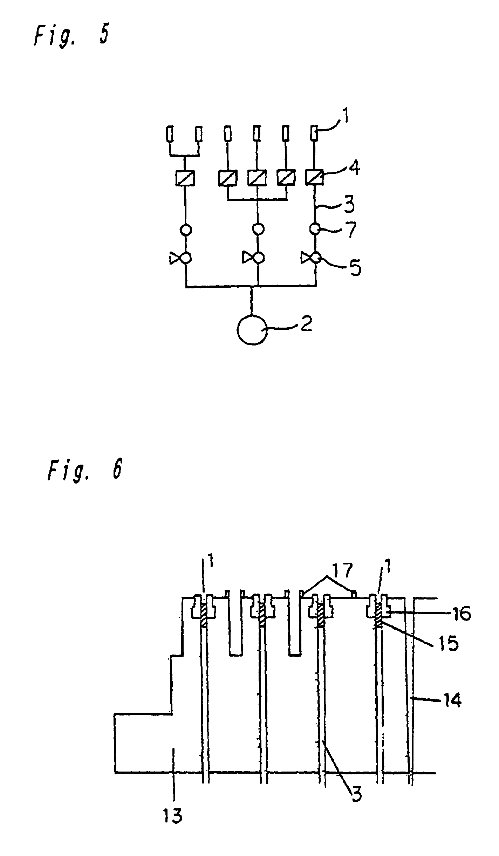

Figure 1 shows an example of a flowing route of the compressed gas suitable for forming two hollow portions. This is a typical example of the flowing route of the compressed gas, and in which two gas supplying openings (1) are provided at positions of a mold surface which positions corresponding to positions where each of the hollow portions will be formed. In this case, two gas paths (3) are connecting each gas supplying opening (1) with a gas supplying source (2), and every gas path is provided with a path-open-close valve (4), and a pressure controlling valve (5) or a flow-rate controlling valve (6). The structure of the gas supplying opening (1) is not limited so long as the compressed gas can be supplied into the mold cavity. Preferable examples thereof include a hollow needle (air needle) and a porous material (shown in Figure 6 at 15) such as sintered alloy, which are buried in a mold surface and are connected with the gas path (3). In the latter, it is very preferred that a heat insulator (16) is provided around the porous material.

The supplying condition of the compressed gas may be arbitrarily controlled based on a supplying pressure or a rate of flow of the compressed gas. When the supplying condition is controlled by the supplying pressure, the pressure controlling valve (5) is used. On the other hand, when the supplying condition is controlled by the rate of flow, the flow-rate controlling valve (6) is used. Although a case where the supplying condition is controlled by the pressure controlling valve (5) will be explained in the following description, the pressure controlling valve (5) may be replaced with the flow-rate controlling valve (6), when the supplying condition is controlled according to the rate of flow of the compressed gas.

In the process for supplying a compressed gas of the present invention, the start and stop of supplying the compressed gas into the mold cavity by opening or closing the path-open-close valve (4) is not essential because the supply of a compressed gas to the gas path (3) can be done by operating the pressure controlling valve (5). The path-open-close valve (4) is generally used in order to surely open or close the gas path. In the following description, a case where the gas path is opened and closed by operating of the path-open-close valve (4) will be explained. In the alternative, the gas path can be closed by making the supplying pressure of the compressed gas at the pressure controlling valve (5) not higher than a pressure in the mold cavity without using the path-open-close valve (4). When the flow-rate controlling valve (6) is used, the rate of flow of the compressed gas at the valve may be made zero.

In the process for supplying a compressed gas of the present invention, the start and stop of supplying the compressed gas from two or more gas supplying openings (1) may be done simultaneously or sequentially. However, in the latter case, during the period of time between start and completion of supplying the compressed gas, there must be a period of time when the compressed gas is supplied from at least two gas supplying openings simultaneously. In the present invention, it is important that the compressed gas must be supplied by controlling the supplying pressure of the compressed gas under a condition that the supplying pressure at at least one gas supplying opening, from which the compressed gas is being supplied, differs from that at the other gas supplying openings, from which the compressed gas being supplying, during at least a part of the period of time when the compressed gas is simultaneously supplied from two or more gas supplying openings.

Examples of embodiment of controlling the supplying pressure of the compressed gas include an embodiment wherein the supplying pressure at one gas supplying opening is kept constant while the supplying pressure at the other gas supplying openings is changed continuously or in step. Another example of controlling the supplying pressure of the compressed gas is an embodiment wherein the supplying pressure of the compressed gas at every gas supplying opening is respectively changed continuously or in step. The manner of controlling the supplying pressure and an optimum condition will be determined according to shape, structure, volume, arrangement and the like of the hollow portions to be formed.

Figures 2 to 5 respectively show application of the above-mentioned fundamental flowing route of the compressed gas.

Figure 2 is a case wherein the mold has four gas supplying openings (1). Each gas supplying openings has a path-open-close valve (4), respectively. Open and close of the valves are conducted independently. Two of the four path-open-close valves (4) are independently connected with pressure controlling valves (5), and the other two path-open-close valves are connected with one common pressure controlling valve (5). Supplying pressure of the compressed gas supplied through the latter two path-open-close valves is controlled so as to be uniform at corresponding gas supplying openings. In this example, the supplying pressure of the compressed gas is controlled by three pressure controlling valves (5). The compressed gas is supplied into the mold cavity in a manner that during at least a part of the period of time when the compressed gas is supplied into the mold cavity, the compressed gas is supplied from two or more gas supplying openings simultaneously {condition (2)}, and during at least a part of the period of time when the compressed gas is supplied from two or more gas supplying openings simultaneously, the supplying pressure of the compressed gas at, at least, one gas supplying opening differs from that at other gas supplying openings {condition (3)}.

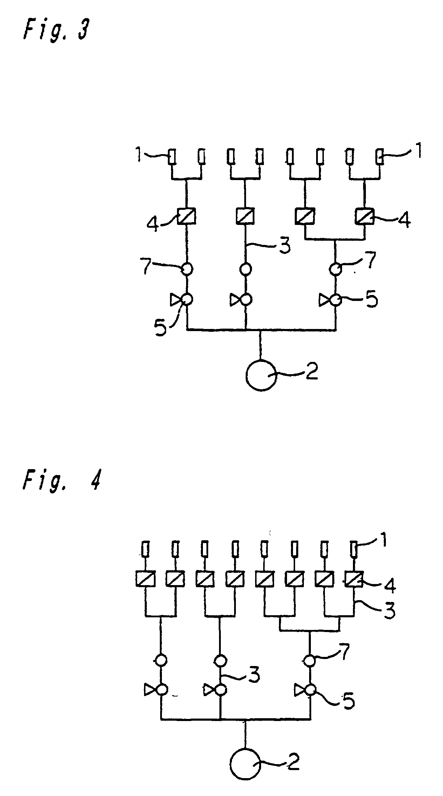

Figure 3 shows an example wherein the mold has eight gas supplying openings (1). This example is fundamentally the same as the example of Figure 2 except that one path-open-close valve (4) is provided for two gas supplying openings (1). In this example, two gas supplying openings connected with one common path-open-close valve (4) are operated in a manner such that the state of opening or closing of the valve and supplying pressure of the compressed gas are the same for the two openings (1).

Figure 4 also shows an example wherein the mold has eight gas supplying openings (1). In this example, each gas supplying opening has an independent path-open-close valve (4). Although the supplying pressure of the compressed gas at four of the eight gas supplying openings is uniformly controlled with one common pressure controlling valve (5), opening and closing of individual path-open-close valves (4) are conducted independently. In this example, the compressed gas is simultaneously supplied from gas supplying openings belonging to at least two of three pressure controlling series during at least a part of the period of time when the compressed gas is supplied. Moreover, the compressed gas is supplied under a condition that, during at least a part of the period of time when the compressed gas is supplied from two or more gas supplying openings simultaneously, the supplying pressure of the compressed gas at, at least, one gas supplying opening differs from that at other gas supplying openings. When the compressed gas is supplied from a pressure controlling series where four gas supplying openings (1) are connected with one common pressure controlling valve (5), at least one of the four gas supplying openings may be opened.

Figure 5 shows a combination of embodiments of Figures 2 to 4.

The path-open-close valve (4) used when necessary is a valve with which a supplying condition of the compressed gas from the gas supplying source (2) to the gas supplying opening (1) is controlled by shutting or opening the gas path (3). Examples of the path-open-close valve (4) include an electromagnetic valve with an opening/closing valve. The pressure controlling valve (5) is a valve for adjusting a supplying pressure of the compressed gas supplied from the gas supplying opening (1). Any valve that can adjust the supplying pressure of the compressed gas to a desired value is applicable. Examples of types of the pressure controlling valve (5) include a type where the supplying pressure is adjusted by controlling a degree of throttle of the valve and a type where the compressed gas is leaked to outside of the gas path. A pressure meter (7) and the like may be provided neighboring with such means for controlling the supplying pressure of the compressed gas.

The path-open-close valve (4) and the pressure controlling valve (5) may be manually operated, or automatically operated according to messages or systematically operated by a pressure controlling system. The last manner is very useful especially for supplying the compressed gas under the same condition repeatedly.

As the gas supplying source (2), any apparatus, by which the compressed gas can constantly be supplied at the same or higher pressure than the highest supplying pressure at the gas supplying openings (1), is applicable. Examples of the apparatus include a tank, a balloon and a bomb. As a gas for the compressed gas, an inert gas or a non-oxidizing gas, which does not react or mix with the molten resin, can generally be used. Gases which may be used include air, carbon dioxide gas, nitrogen gas and helium gas. Among them, air and nitrogen gas are preferred.

In the process for supplying a compressed gas it is preferred that the compressed gas is supplied by changing the supplying pressure in two or more steps according to solidifying conditions of the molten resin, arrangement of the hollow portions to be formed and arrangement of the gas supplying openings and the like. However, the supplying pressure of the compressed gas at one gas supplying series may be constant from start to finish of supplying the compressed gas. It is also preferred that the compressed gas is supplied by changing the supplying pressure at two or more gas supplying series in combination. When the supplying pressure of the compressed gas is too high, walls forming the hollow portions are broken and the required gas supplying apparatus is large. The supplying pressure of the compressed gas is preferably within the range from 9.81 to 98.1N/cm² (1 to 10 Kgf/cm²).

The above-mentioned way of supplying a compressed gas is used in the process for producing a hollow article according to the invention which comprises a step of supplying a molten resin into a mold cavity formed by a pair of a male mold and a female mold and a step of supplying the compressed gas into the mold cavity containing the molten resin. In the process for producing a hollow article, the compressed gas is supplied into the mold cavity under previously mentioned conditions (1) to (3) .

An example of the process for producing a hollow article of the present invention includes a process comprising the following steps. In this process, the compressed gas is supplied into the mold cavity under the above-mentioned conditions (1) to (3).
(a) A step of supplying a predetermined amount of molten resin to a mold cavity defined between mold surfaces of a pair of a male mold and a female mold, the mold being opened.
(b) A step of starting to close the molds, while doing step (a), or at or after the completion of step (a).
(c) A step of continuing to close the molds until a mold cavity is filled with the molten resin.
(d) A step of starting to open the molds at or after the time when the mold cavity is filled with the molten resin.
(e) A step of starting to supply a compressed gas from gas supplying openings provided on a mold surface, before or at the time of starting to open the molds.
(f) A step of continuing to open the molds until a cavity clearance reaches a predetermined value while supplying the compressed gas.
(g) A step of cooling the molten resin to solidify it while supplying the compressed gas.

Although the hollow molded article to be produced according to this process may have one hollow portion or plural hollow portions, the latter is preferred.

The gas supplying openings (1) are provided on one or both of mold surfaces of a male mold (13) and a female mold (12) at a position where the hollow portion(s) will be formed. When one hollow portion will be formed, two or more gas supplying openings are provided at a position where the hollow portion will be formed. When-plural hollow portions will be formed, the gas supplying openings are provided at positions where those hollow portions will be formed. In the latter case, although one gas supplying opening is provided for every hollow portion, two or more gas supplying openings may be provided for each hollow portion.

Although a manner to supply the molten resin to between the male mold and female mold in step (a) is not particularly limited, since closure of the molds can be started before start of solidification of the molten resin due to cooling, the molten resin is preferably supplied through a molten resin path (14) provided in the mold. Besides such a manner, the molten resin may, for example, be extruded to between the molds from a resin supplying nozzle provided outside the molds, or may be previously weighted and placed on a mold surface.

When producing a hollow article having plural hollow portions which are separated from each other by dividing a hollow portion with ribs is produced, since positions where the ribs and the hollow portions will be formed can be specified, it is practically effective that at least one protrusion (17) is provided on a mold surface at a position where the ribs will be formed.

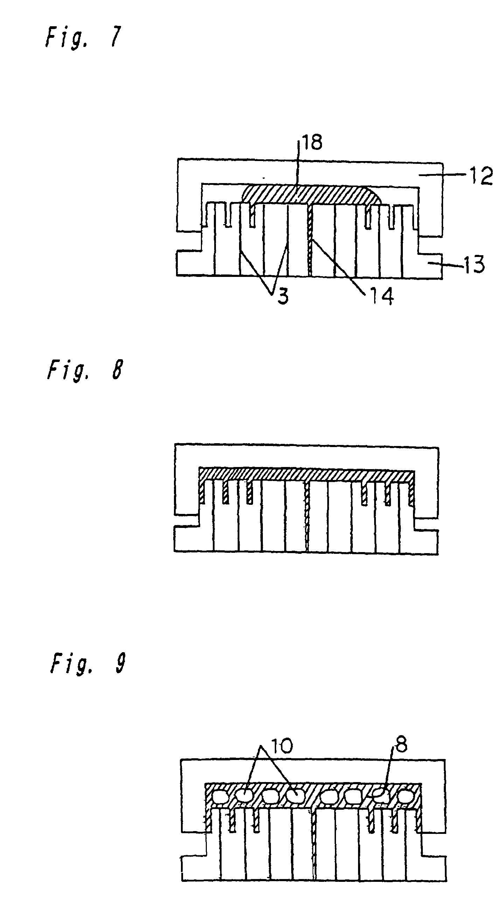

For example, a predetermined amount of molten resin (18) is supplied into a mold cavity deformed between mold surfaces of a pair of a male mold (13) and a female mold (12) through a molten resin path (14) as demonstrated in Figure 7, and the molds are closed to fill the mold cavity with the molten resin as shown in Figure 8. Here, closing the molds may be started after completion of supplying the molten resin to between the mold surfaces, or may be started while the molten resin is being supplied to between the mold surfaces and finished at or after the time of completion of supplying the molten resin. When a mold assembly shown in Figure 7 is used, all manners above described may be applied. However, a manner where closing the mold can be started while the molten resin is being supplied is generally available only in a case where the mold assembly shown in Figure 7 is used and the molten resin is supplied through the molten resin path (14). Figure 7 is a partially enlarged cross section view of the male mold (13) used in this example.

Opening the molds is started at or after the time when the mold cavity is filled with the molten resin, and as shown in Figure 9, opening the molds is stopped at the time when a cavity clearance reaches a thickness of a desired hollow article. Opening the molds is preferably started as soon as possible after filling the mold cavity with the molten resin so that the molten resin supplied into the mold cavity does not cool to solidify. Opening the molds is continued until the cavity clearance reaches the thickness of the hollow article to be produced. An increased volume of the mold cavity by opening the molds corresponds to the whole volume of the hollow portions formed in the hollow article.

At or before the time when opening the molds is started, supplying the compressed gas into the mold cavity is started. Supplying the compressed gas is generally continued after finish of opening the molds and until the molten resin is cooled and solidified.

In the process for producing a hollow article of the present invention, it is especially important that the compressed gas is supplied into the mold cavity under the following three conditions:
(1) the compressed gas is supplied from plural gas supplying openings;
(2) the compressed gas is supplied from two or more gas supplying openings simultaneously, during at least a part of the period of time when the compressed gas is supplied; and
(3) during at least a part of the period of time when the compressed gas is supplied from two or more gas supplying openings simultaneously, a supplying pressure or a rate of flow of the compressed gas at, at least, one gas supplying opening differs from those at the other gas supplying openings. Details of such a method of supplying the compressed gas are previously described.

By performing opening the molds and supplying the compressed gas simultaneously, the hollow portions are formed between walls of the molten resin adhered to the mold surfaces and at the same time ribs are formed to connect the walls of the molten resin on the both mold surfaces. As a result, a hollow article having hollow portions separated with the ribs is formed.

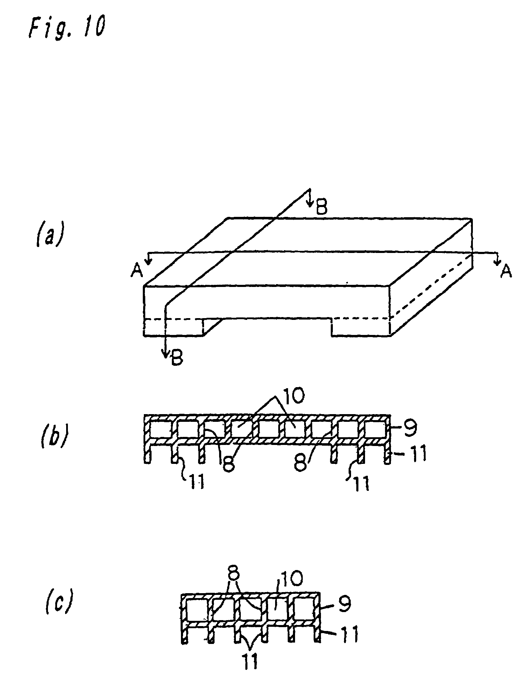

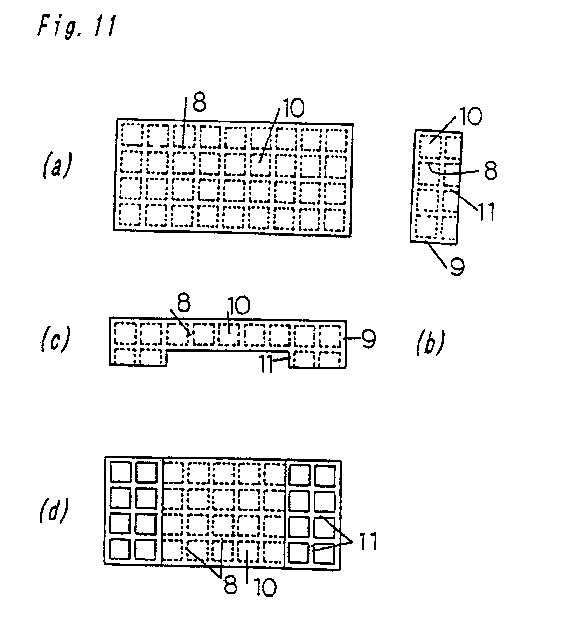

By using such a process, a hollow article having ribs as shown in Figures 10 and 11, which is useful for producing a hollow pallet, can be readily produced.

Figure 10 demonstrates a hollow article having ribs. Figure 10(a) shows an appearance of the hollow article.-Figures 10(b) and 10(c) show cross sections of the hollow article at Line A-A and at Line B-B in Figure 10(a), respectively.

Figure 11 demonstrates a structure of the hollow article having ribs. Figure 11(a) shows a plan view of the hollow article from an upper side (an upper plate side) thereof. Figure 11(c) shows a plan view of the hollow article from a lower side (a bottom plate side) thereof. Figures 11(b) and 11(d) show a front view and a side view of the hollow article, respectively.

This way is used in the process for producing a hollow article of the present invention, in order to supply the compressed gas by controlling a supplying pressure of the compressed gas depending on a shape, a volume, and the like of the hollow portions, a hollow article having a large hollow portion, or a complicated shape, or, especially, plural independent hollow portions, is readily produced without using any frame-like mold parts used in the prior art.

A hollow article having ribs which article having plural hollow portions (10) surrounded by inner ribs (8) and having outer side wall (9) and outer ribs (11) extended from the inner ribs (8) outside the hollow portions, is very useful as parts for a hollow pallet. A hollow article having hollow portions of relatively uniform shape or volume, or having ribs of relatively uniform thickness can be produced by suitably controlling the supplying pressure of the compressed gas. In such a case, the supplying pressure of the compressed gas is controlled in a manner, for example, that the supplying pressure at gas supplying openings for forming relatively outside hollow portions is made high and the supplying pressure at gas supplying openings for forming relatively inside hollow portions and outer ribs (11) is made low, or that a difference in the supplying pressure is made for a while from start of supplying the compressed gas, and then the supplying pressure is unified. The hollow pallet can be produced by connecting two hollow articles having ribs by, for example, fusing the ends of the outer ribs of each hollow article.

Examples of a resin to be used for the process of the present invention include a thermoplastic resin such as, for example, polyethylene resin, polypropylene resin, polyamide resin, polyethyleneterephtalate resin, acrylonitrile-butadiene-styrene resin (ABS resin), poly (vinyl chloride) resin, polycarbonate resin; a thermoplastic elastomer such as, for example, ethylenepropylene based rubbers; a mixture or modified material thereof; and a polymer alloy. The resin may contain one or more fillers having compatibility with the resin such as, for example, an inorganic fiber such as a glass fiber, a carbon fiber and the like; an inorganic particle such as, for example, talc, clay, silica, calcium carbonate, and the like. In addition, conventional additives such as, for example, antioxidants , UV absorbers, colorants, flame retardants, shrinkage lowering agents may be incorporated to the resin.

## Claims

1. A process for producing a hollow article comprising the steps of:
(a) supplying a predetermined amount of a molten resin (18) into a mold cavity defined between mold surfaces of a pair of a male mold (13) and a female mold (12), the molds being opened;
(b) starting to close the male (13) and female molds (12) before, during or after step (a);
(c) continuing to close the male and female molds until the mold cavity is filled with the molten resin;
(d) starting to open the male and female molds at or after a time when the mold cavity is filled with the molten resin;
(e) starting to supply a compressed gas into said molten resin from gas supplying openings (1) provided on one or more of the mold surfaces, before or at the time of starting to open the male and female molds;
(f) continuing to open the male and female molds until a cavity clearance reaches a predetermined value while supplying the compressed gas;
(g) cooling the molten resin to solidify it while supplying the compressed gas, wherein the compressed gas is supplied from a plurality of gas supplying openings (1); and
wherein the compressed gas is supplied from two or more gas supplying openings (1) simultaneously, during at least a part of the period of time when the compresses gas is supplied; and
during at least a part of the period of time when the compressed gas is supplied from two or more gas supplying openings simultaneously, providing a supplying pressure or a rate of flow of the compressed gas at, at least, one gas supplying opening which differs from the supplying pressure or the rate of flow at the other gas supplying openings.

2. The process according to claim 1, wherein the compressed gas is supplied by changing the supplying pressure or the rate of flow of the compressed gas in two or more steps.

3. The process according to claim 1 or 2, wherein the supplyin pressure of the compressed gas is within a range of from 9.81 to 98.1 N/cm² (1 to 10 Kgf/cm²).

4. The process according to any of the preceding claims, wherein the compressed gas is compressed air or compressed nitrogen gas.

5. The process according to any of claims 1 to 4, wherein said molten resin is supplied in the form of a single mass, wherein said single mass of molten resin being a mass of molten resin supplied to the mold cavity through a single molten resin path.

## Patentansprüche

1. Verfahren zur Herstellung eines hohlen Gegenstandes, das die Schritte aufweist:
(a) Zuführen einer vorbestimmten Menge einer Harzschmelze (18) in einen Formhohlraum, der zwischen Formflächen eines Paares einer Patrizenform (13) und einer Matrizenform (12) definiert ist, wobei die Formen geöffnet sind;
(b) Beginnen, die Patrizenform (13) und Matrizenform (12) vor, während oder nach dem Schritt (a) zu schließen;
(c) Fortfahren, die Patrizenform und Matrizenform zu schließen, bis der Formhohlraum mit der Harzschmelze gefüllt ist;
(d) Beginnen, die Patrizenform und Matrizenform zu oder nach einer Zeit zu öffnen, zu der der Formhohlraum mit der Harzschmelze gefüllt ist;
(e) Beginnen, ein Druckgas in die Harzschmelze aus Gaszufuhröffnungen (1) zuzuführen, die an einer oder mehreren der Formflächen vorgesehen sind, vor oder zur Zeit des Beginnens, die Patrizenform und Matrizenform zu öffnen;
(f) Fortfahren, die Patrizenform und Matrizenform zu öffnen, bis ein lichter Raum des Hohlraums während des Zuführens des Druckgases einen vorbestimmten Wert erreicht;
(g) Kühlen der Harzschmelze, um sie während des Zuführens des Druckgases zu verfestigen, wobei das Druckgas aus mehreren Gaszufuhröffnungen (1) zugeführt wird; und
wobei das Druckgas aus zwei oder mehreren Gaszufuhröffnungen (1) während mindestens eines Teils der Zeitspanne, in der das Druckgas zugeführt wird, gleichzeitig zugeführt wird; und
während mindestens eines Teils der Zeitspanne, in der das Druckgas aus zwei oder mehreren Gaszufuhröffnungen gleichzeitig zugeführt wird, Bereitstellen eines Zufuhrdrucks oder einer Strömungsgeschwindigkeit des Druckgases an mindestens einer Gaszufuhröffnung, der oder die sich von dem Zufuhrdruck oder der Strömungsgeschwindigkeit an den anderen Gaszufuhröffnungen unterscheidet.

2. Verfahren nach Anspruch 1, wobei das Druckgas zugeführt wird, indem der Zufuhrdruck oder die Strömungsgeschwindigkeit des Druckgases in zwei oder mehr Schritten geändert wird.

3. Verfahren nach Anspruch 1 oder 2, wobei der Zufuhrdruck des Druckgases in einem Bereich von 9,81 bis 98,1 N/cm² (1 bis 10 Kgf/cm²) liegt.

4. Verfahren nach einem der vorhergehenden Ansprüche, wobei das Druckgas Druckluft oder Druckstickstoffgas ist.

5. Verfahren nach einem der Ansprüche 1 bis 4, wobei die Harzschmelze in der Form einer einzelnen Masse zugeführt wird, wobei die einzelne Masse der Harzschmelze eine Masse der Harzschmelze ist, die in den Formhohlraum durch einen einzelnen Harzschmelzenweg zugeführt wird.

## Revendications

1. Procédé de fabrication d'un article creux comprenant les étapes consistant à :
(a) fournir une quantité prédéterminée d'une résine fondue (18) dans une cavité de moulage définie entre les surfaces de moulage d'une paire composée d'un moule mâle (13) et d'un moule femelle (12), les moules étant ouverts ;
(b) commencer à fermer les moules mâle (13) et femelle (12), avant, au cours de, ou après l'étape (a) ;
(c) continuer a rermer les moules male et femelle jusqu'à ce que la cavité de moulage soit remplie avec la résine fondue ;
(d) commencer à ouvrir les moules mâle et femelle au moment où, ou après que la cavité de moulage soit remplie avec la résine fondue ;
(e) commencer à injecter un gaz sous pression dans ladite résine fondue à partir d'ouvertures d'injectionde gaz (1) ménagées sur une ou plusieurs surfaces de moulage avant, ou au moment de commencer à ouvrir les moules mâle et femelle ;
(f) continuer à ouvrir les moules mâle et femelle jusqu'à ce qu'un écart dans la cavité atteigne une valeur prédéterminée tandis que le gaz sous pression est injecté ;
(g) refroidir la résine fondue de façon à ce qu'elle solidifie tandis que le gaz sous pression est injecté,
dans lequel le gaz sous pression est injecté à partir d'une pluralité ouvertures d'injection de gaz (1) ; et
dans lequel le gaz sous pression est injecté à partir de deux ou de plusieurs ouvertures d'injection de gaz (1) en même temps, durant au moins une partie de la période de temps durant laquelle le gaz sous pression est injecté ; et
durant au moins une partie de la période de temps durant laquelle le gaz sous pression est injecté à partir de deux ou plusieurs ouvertures d'injection de gaz en même temps, fournir une pression d'injection ou un débit d'écoulement du gaz sous pression au niveau d'au moins une ouverture d'injection de gaz qui soit différent de la pression d'injection ou du débit d'écoulement du gaz au niveau des autres ouvertures d'injection de gaz.

2. Procédé selon la revendication 1, dans lequel le gaz sous pression est injecté en modifiant la pression d'injection ou le débit d'écoulement du gaz sous pression en deux ou plusieurs étapes.

3. Procédé selon la revendication 1 ou 2, dans lequel la pression d'injection du gaz sous pression est comprise dans une plage allant de 9,81 à 98,1 N/cm² (1 à 10 Kgf/cm²).

4. Procédé selon l'une quelconque des revendications précédentes, dans lequel le gaz sous pression est de l'air sous pression ou de l'azote sous pression.

5. Procédé selon l'une quelconque des revendications 1 à 4, dans lequel ladite résine fondue est injectée sous la forme d'une masse unique, dans lequel ladite masse de résine fondue unique étant une masse de résine fondue injectée dans la cavité de moulage à travers une seule trajectoire d'injection de la résine fondue.
